Europäisches Patentamt

European Patent Office

Office européen des brevets

(11) Veröffentlichungsnummer: **0 338 340**

**A1**

(12) **EUROPÄISCHE PATENTANMELDUNG**

(21) Anmeldenummer: **89106095.6**

(22) Anmeldetag: **07.04.89**

(51) Int. Cl.⁴: **H02B 1/20 , H02G 3/04 , F16L 3/22 , F16L 3/24**

(30) Priorität: **19.04.88 DE 3813002**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Zachrei, Jürgen**
**Am Hungersberg 2**
**D-6340 Dillenburg-Nanzenbach(DE)**
Erfinder: **Schäfer, Helmut**
**Numbachstrasse 7**
**D-5910 Kreuztal-Fellinghausen(DE)**

(74) Vertreter: **Vogel, Georg**
**Pat.-Ing. Georg Vogel**
**Hermann-Essig-Strasse 35**
**D-7141 Schwieberdingen(DE)**

(54) **Kabel- und Schlauchhalter für Schaltschränke.**

(57) Die Erfindung betrifft einen Kabel- und Schlauchhalter zum Befestigen an Rahmenschenkeln des Schrankkorpus oder an mit den Rahmenschenkeln verbundenen Montageschienen von Schaltschränken, wobei die Rahmenschenkel und/oder die Montageschienen mit Reihen von Befestigungsbohrungen und/oder Durchbrüchen versehen sind. Ein einfacher Kabel-und Schlauchhalter für horizontale und vertikale Befestigungsflächen mit voller Ausnutzung seines Aufnahmeraumes wird nach der Erfindung dadurch geschaffen, daß er als rechteckförmiger Kastenrahmen ausgebildet ist, der auf einer Rahmenlängsseite eine Einführöffnung aufweist, daß die Einführöffnung die zugeordnete Rahmenlängsseite in einen kurzen und einen langen Rahmenschenkel unterteilt und daß alle Rahmenschenkel des Kastenrahmens eine zumindest über den wesentlichen Teil ihrer Schenkellänge reichende Längsdurchbrechung aufweisen.

FIG.3

## Kabel- und Schlauchhalter für Schaltschränke

Die Erfindung betrifft einen Kabel- und Schlauchhalter zum Befestigen an Rahmenschenkeln des Schrankkorpus oder an mit den Rahmenschenkeln verbundenen Montageschienen von Schaltschränken, wobei die Rahmenschenkel und/oder die Montageschienen mit Reihen von Befestigungsbohrungen und/oder Durchbrüchen versehen sind.

Gerade in einem Schaltschrank werden für die Festlegung der Verdrahtung der Einbaugeräte Kabel- und Schlauchhalter benötigt, die nicht nur an horizontal oder vertikal ausgerichteten Befestigungsflächen befestigt werden müssen, sondern bei denen auch das Einbringen der Kabel und von Schläuchen, die Kabel aufnehmen, leicht möglich ist.

Es sind Kabel- und Schlauchhalter der eingangs erwähnten Art bekannt, die in der Regel als Kunststoff-Spritzgußteil hergestellt sind und aus einem Basisteil und einem Abdeckteil bestehen. Das Basisteil nimmt die Kabel und die Schläuche in einer meist halbkreisförmigen Aufnahme auf und das ebenfalls meist halbkreisförmige Abdeckteil verschließt die Aufnahme des Basisteils. Dabei kann zur Verbindung eine einfache Rastverbindung vorgesehen sein und das Abdeckteil kann mittels eines Filmscharniers einstückig am Basisteil angeformt sein.

Diese bekannten Kabel- und Schlauchhalter können an horizontalen und vertikalen Befestigungsflächen angebracht werden. Besonders bei der Befestigung an vertikalen Befestigungsflächen ist das Einbringen der Kabel und Schläuche in die Aufnahme des Basisteils erschwert, da diese erst nach dem Verschließen der Aufnahme mittels des Abdeckteils in dem Kabel- und Schlauchhalter gehalten sind. Außerdem läßt sich der Aufnahmeraum des bekannten Kabel-und Schlauchhalters nicht oder nur sehr schwer voll zur Aufnahme von Kabeln und Schläuchen ausnützen.

Es ist Aufgabe der Erfindung, einen Kabel- und Schlauchhalter der eingangs erwähnten Art zu schaffen, der sehr einfach im Aufbau ist und sowohl bei der Befestigung an einer horizontalen, als auch an einer vertikalen Befestigungsfläche Kabel und Schläuche sehr schnell und leicht aufnehmen kann, wobei praktisch der gesamte Aufnahmeraum des Kabel- und Schlauchhalters zur Aufnahme von Kabeln und Schläuchen ausgenützt werden kann.

Diese Aufgabe wird nach der Erfindung dadurch gelöst, daß der Kabel- und Schlauchhalter als rechteckförmiger Kastenrahmen ausgebildet ist, der auf einer Rahmenlängsseite eine Einführöffnung aufweist, daß die Einführöffnung die zugeordnete Rahmenlängsseite in einen kurzen und einen langen Rahmenschenkel unterteilt und daß alle Rahmenschenkel des Kastenrahmens eine zumindest über den wesentlichen Teil ihrer Schenkellänge reichende Längsdurchbrechung aufweisen.

Bei dieser Ausgestaltung des Kabel- und Schlauchhalters kann jeder Rahmenschenkel zur Befestigung ausgenützt werden, so daß die Einführöffnung stets so gelegt werden kann, daß die eingeführten Kabel und Schläuche schon nach dem Einbringen eindeutig gehalten werden. Dabei lassen in jeder Befestigungsart die Längsdurchbrechungen in den Rahmenschenkeln eine begrenzte Verschiebung des Kabel- und Schlauchhalters an dem Rahmenschenkel oder der Montageschiene des Schaltschrankes zu. Der Kabel- und Schlauchhalter ist auch einstückig und auf einfache Weise kostengünstig herstellbar.

Ist nach einer Ausgestaltung vorgesehen, daß die Längsdurchbrechungen der Rahmenschenkel jeweils in den Bereichen der Eckkanten des Kastenrahmens unterbrochen sind und im Bereich der Einführöffnung geschlossen sind, dann wird durch diese Unterbrechungen der Längsdurchbrechungen eine ausgezeichnete Stabilität des Kabel- und Schlauchhalters erreicht.

In vielen Fällen ist jedoch eine Ausgestaltung voll ausreichend, die dadurch gekennzeichnet ist, daß die Längsdurchbrechung sich über alle Rahmenschenkel hinweg erstreckt und nur im Bereich der Einführöffnung geschlossen ist.

Dabei hat sich als vorteilhaft erwiesen, wenn vorgesehen ist, daß die Längsdurchbrechung(en) in der Mitte der Breite der Rahmenschenkel des Kastenrahmens eingebracht ist (sind).

Eine Ausgestaltung ist dadurch gekennzeichnet, daß die Abmessungen der Rahmenlängsseiten und der Rahmenschmalseiten des Kastenrahmens etwa im Verhältnis 2:1 stehen und daß die Einführöffnung den kurzen und den langen Rahmenschenkel der zugeordneten Rahmenlängsseite im Verhältnis 1:3 abteilt.

Für die Herstellung des Kastenrahmens kann nach einer Ausgestaltung vorgesehen sein, daß der Kastenrahmen aus einem Flachmaterial-Abschnitt gebogen ist und daß in die Rahmenschenkel als Längsschlitze ausgebildete Längsdurchbrechungen oder ein durchgehender Längsschlitz als durchgehende Längsdurchbrechung eingebracht sind oder ist. Dabei sind die Eckkanten des Kastenrahmens und die Ecken im Bereich der Einführöffnung abgerundet.

Die Herstellung des Kastenrahmens kann nach einer Ausgestaltung auch so ausgeführt sein, daß der Kastenrahmen aus einem einzigen Runddrahtabschnitt gebogen ist, wobei die Rahmenschenkel jeweils durch zwei im Abstand zueinander verlaufende Abschnitte des Runddrahtabschnittes gebildet sind, und daß die der Einführöffnung zugekehrten parallelen Abschnitte des kurzen und langen Rahmenschenkels jeweils mittels eines quer verlaufenden Abschnittes des Runddrahtabschnittes miteinander verbunden sind. Dabei ist der aus dem Runddrahtabschnitt endlos gebogene Kastenrahmen an allen Ecken abgerundet und an einer Stelle sind die aufeinanderstoßenden Enden des Runddrahtabschnittes miteinander verschweißt.

Zur Befestigung des Kabel- und Schlauchhalters im Schaltschrank ist vorgesehen, daß eine Befestigungsplatte vorgesehen ist, die einen beliebigen Rahmenschenkel übergreifen kann, daß die Befestigungsplatte mindestens eine mittige Befestigungsbohrung aufweist, die eine Befestigungsschraube aufnimmt, und daß die Befestigungsschraube durch die Längsdurchbrechung des Rahmenschenkels hindurch in eine Bohrung oder Gewindebohrung des Rahmenschenkels oder der Montageschiene des Schaltschrankes einschraubbar ist.

Bei einem Kabel- und Schlauchhalter aus einem gebogenen Runddrahtabschnitt ist die Ausgestaltung weiterhin so, daß die Befestigungsplatte kanalartig gebogene Längsseiten aufweist, die an den Durchmesser des Runddrahtabschnittes des Kastenrahmens angepaßte Längsaufnahmen bilden, und daß die Längsaufnahmen im Abstand zueinander angeordnet sind, der dem Abstand der parallelen Abschnitte der Rahmenschenkel des Kastenrahmens entspricht.

Eine unverdrehbare Befestigung des Kabel- und Schlauchhalters mit einer einzigen Befestigungsschraube wird nach einer Ausgestaltung dadurch erhalten, daß die Befestigungsplatte zwischen den Längsaufnahmen und außerhalb der Befestigungsbohrung einen abgebogenen Halteansatz aufweist, der in einen Durchbruch eines Rahmenschenkels oder einer Montageschiene des Schaltschrankes einführbar ist und die Befestigungsplatte und damit den Kastenrahmen unverdrehbar festlegt.

Die unverdrehbare Festlegung der Befestigungsplatte kann nach einer weiteren Ausgestaltung auch dadurch erhalten werden, daß die Befestigungsplatte neben der Befestigungsbohrung weitere Bohrungen zum Einführen von Haltebolzen aufweist, die an Befestigungswinkeln oder dgl. angebracht sind.

Die Erfindung wird anhand eines aus einem Runddrahtabschnitt gebogenen Kabel- und Schlauchhalters, wie er in den Zeichnungen perspektivisch in verschiedenen Befestigungsarten gezeigt ist, näher erläutert. Es zeigt:

Fig. 1 den Kabel- und Schlauchhalter in vertikaler Ausrichtung für die Befestigung an einer vertikalen Befestigungsfläche einer vertikalen Montageschiene,

Fig. 2 den Kabel- und Schlauchhalter in horizontaler Ausrichtung an einer vertikalen Befestigungsfläche einer vertikalen Montageschiene und

Fig. 3 eine vertikale Montageschiene mit zwei horizontal ausgerichteten Kabel- und Schlauchhaltern, von denen der eine an einer vertikalen und der andere an einer horizontalen Befestigungsfläche der Montageschiene befestigt ist.

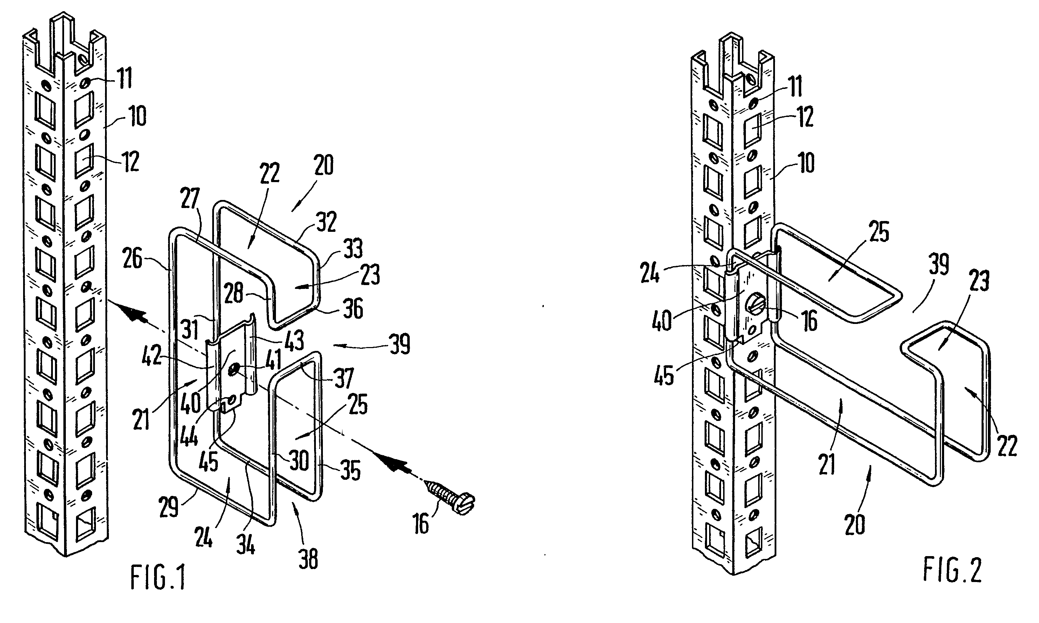

Die Montageschiene 10 der Fig. 1 ist vertikal ausgerichtet und trägt an drei Seiten Befestigungsbohrungen 11 in aufeinander ausgerichteten Reihen und jeweils gleichmäßigen Abständen. Zwischen den Befestigungsbohrungen 11 sind in gleicher Teilung jeweils quadratische oder rechteckförmige Durchbrüche 12 eingebracht.

Der Kabel- und Schlauchhalter ist als rechteckförmiger Kastenrahmen 20 ausgebildet, wie die Rahmenschenkel 21, 22, 23, 24 und 25 zeigen. Die dem Rahmenschenkel 21 der Rahmenlängsseite gegenüberliegende Rahmenlängsseite ist durch die Einführöffnung 39 in den kurzen Rahmenschenkel 23 und den langen Rahmenschenkel 25 unterteilt, deren Schenkellängen etwa im Verhältnis 1:3 stehen. Die Rahmenlängsseiten stehen zu den die Rahmenschmalseiten bildenden Rahmenschenkel 24 und 25 etwa im Verhältnis 2:1. Der Kastenrahmen 20 kann in gleicher Form auch aus einem Flachmaterialstreifen gebogen werden. Beim Ausführungsbeispiel wird der Kastenrahmen 20 jedoch aus einem einzigen Runddrahtabschnitt endlos gebogen, wobei im Abstand parallele Abschnitte des gebogenen Runddrahtabschnittes die Rahmenschenkel bilden, wie z.B. die Abschnitte 26 und 31 den Rahmenschenkel 21, die Abschnitte 27 und 32 den Rahmenschenkel 22, die Abschnitte 28 und 33 den Rahmenschenkel 23, die Abschnitte 29 und 34 den Rahmenschenkel 24 und die Abschnitte 30 und 35 den Rahmenschenkel 25. Die Abschnitte 28 und 33 des Rahmenschenkels 23 sind über den quer verlaufenden und die Einführöffnung 39 begrenzenden Abschnitt 36 miteinander verbunden, während die Abschnitte 30 und 35 des Rahmenschenkels 25 über den quer verlaufenden und die Einführöffnung 39 begrenzenden Abschnitt 37 miteinander verbunden sind. Alle Ecken des Kastenrahmens 20 sind abgerundet und an einer Stelle sind die aufeinanderstoßenden Enden des Runddrahtabschnittes miteinander verschweißt. Die Rahmenschenkel 21 bis 25 sind durch die durchgehende Längsdurchbrechung 38 bis auf die quer verlaufenden Abschnitte 36 und 37 unterteilt, so daß an jeder beliebigen Stelle eine Befestigungsschraube 16 durch die Rahmenschenkel 21 bis 25 geführt werden kann. Bei einem aus einem Flachmaterialstreifen gebogenen Kastenrahmen 20 kann die Längsdurchbrechung 38 auch in einzelne Längsschlitze unterteilt sein, die sich jeweils über den wesentlichen Teil der Schenkellänge der zugeordneten Rahmenschenkel 21 bis 25 erstrecken. Dadurch wird der Kastenrahmen 20 im Bereich der Eckkanten, die ebenfalls abgerundet sein können, wesentlich verstärkt. Die der Einführöffnung 39 zugekehrten Kanten sind an den Ecken dann ebenfalls abgerundet.

Zum Befestigen des Kabel- und Schlauchhalters dient die Befestigungsplatte 40, die an jeder beliebigen Stelle der Rahmenschenkel 21 bis 25 den Rahmenschenkel in der Breite überdeckt und im Zentrum die Befestigungsbohrung 41 für die Befestigungsschraube 16 aufweist. Bei dem aus einem Runddrahtabschnitt gebogenen Kastenrahmen 20 sind die Längsseiten der Befestigungsplatte 40 als parallele Längsaufnahmen 42 und 43 ausgebildet, die im Querschnitt an den Durchmesser des Runddrahtabschnittes und im Abstand auf die parallelen Abschnitte 26 und 31 bzw. 27 und 32 bzw. 28 und 33 bzw. 29 und 34 bzw. 30 und 35 des Kastenrahmens 20 abgestimmt sind.

In Fig. 1 ist der der Rahmenlängsseite zugeordnete Rahmenschenkel 21 zur Befestigung an der vertikalen Befestigungsfläche der vertikalen Montageschiene 10 vorgesehen. Die Befestigungsplatte 40 übergreift den Rahmenschenkel 21 auf der Innenseite des Aufnahmeraumes des Kastenrahmens 20, wobei die Längsaufnahmen 42 und 43 die Abschnitte 26 und 31 aufnehmen. Die Befestigungsschraube 16 wird durch die Befestigungsbohrung 41 der Befestigungsplatte 40 geführt und in eine Befestigungsbohrung selbstschneidend oder in eine Gewindebohrung 11 der Montageschiene 10 eingeschraubt. An einer Schmalseite der Befestigungsplatte 40 ist der Halteansatz 45 abgebogen, der dabei in einen Durchbruch 12 der Montageschiene 10 ragt und die Befestigungsplatte 40 und damit den Kabel-und Schlauchhalter unverdrehbar an der Montageschiene 10 festlegt. Der lange Rahmenschenkel 25 ragt in der gewählten Befestigungsart nach oben und hält die über die Einführöffnung 39 eingeführten Kabel und Schläuche in dem vom Kastenrahmen 20 umschlossenen Aufnahmeraum. Die Einführöffnung 39 kann nach dem Einbringen aller Kabel und Schläuche mittels eines an sich bekannten Kabelbinders verschlossen werden. Der so befestigte Kabel- und Schlauchhalter läßt sich an der Montageschiene 10 vor dem Festziehen der Befestigungsschraube 16 verstellen.

Ist neben der Montageschiene 10 genügend Platz, dann kann der Kastenrahmen 20 über den Rahmenschenkel 24 mit seinen Rahmenlängsseiten auch horizontal ausgerichtet an der Montageschiene 10 befestigt werden, wie Fig. 2 zeigt. Dabei sind die Rahmenschenkel 23 und 25 mit der Einführöffnung 39 nach oben gekehrt, so daß in den Aufnahmeraum des Kastenrahmens 20 bequem Kabel und Schläuche eingebracht werden können, ohne ein Herausfallen derselben befürchten zu müssen.

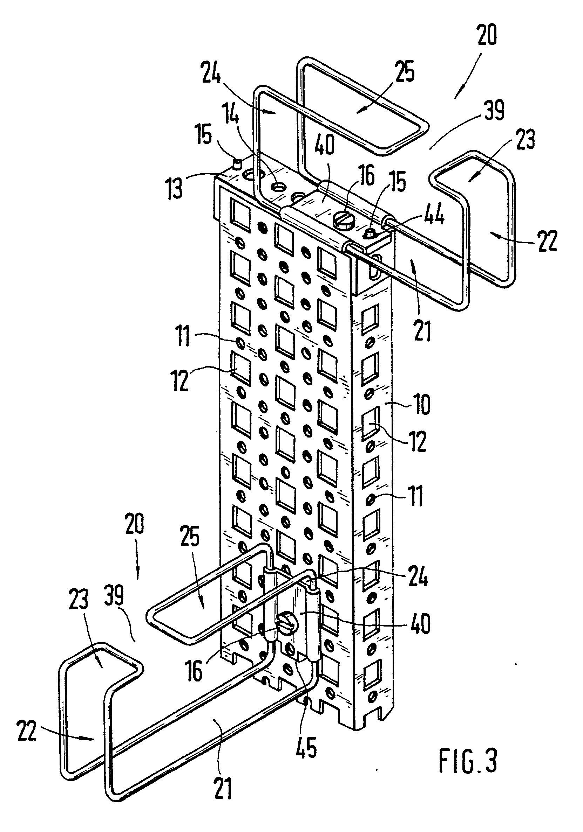

Schließlich zeigt die Fig. 3 eine anders gestaltete Montageschiene 10, deren obere Stirnseite mit einem Befestigungswinkel 13 mit Befestigungsbohrungen 14 und Haltebolzen 15 abgeschlossen ist. Auf der Breitseite der Montageschiene 10 ist ein erster Kabel- und Schlauchhalter horizontal ausgerichtet befestigt und zwar über den Rahmenschenkel 24 wie bei der Befestigungsart nach Fig. 2. Ein zweiter Kabel- und Schlauchhalter ist über den Rahmenschenkel 21 mit dem Befestigungswinkel 13 verbunden und zwar in horizontaler Ausrichtung. Dabei steht der Kastenrahmen 20 an der Schmalseite der Montageschiene 10 vor. Die Befestigungsplatte 40 trägt neben der Befestigungsbohrung 41 für die Befestigungsschraube 16 weitere Bohrungen 44, von denen eine den Haltebolzen 15 des Befestigungswinkels 13 aufnehmen und die Befestigungsplatte 40 und damit den Kastenrahmen 20 unverdrehbar am Befestigungswinkel 13 festlegen kann. Die Rahmenschenkel 23 und 25 sowie die Einführöffnung 39 beider Kabel- und Schlauchhalter sind nach oben gekehrt und geben freien Zugang zu den Aufnahmeräumen der Kastenrahmen 20.

## Ansprüche

1. Kabel- und Schlauchhalter zum Befestigen an Rahmenschenkeln des Schrankkorpus oder an mit den Rahmenschenkeln verbundenen Montageschienen von Schaltschränken, wobei die Rahmenschenkel und/oder die Montageschienen mit Reihen von Befestigungsbohrungen und/oder Durchbrüchen versehen sind,
dadurch gekennzeichnet,
daß er als rechteckförmiger Kastenrahmen (20) ausgebildet ist, der auf einer Rahmenlängsseite eine Einführöffnung (39) aufweist,
daß die Einführöffnung (39) die zugeordnete Rahmenlängsseite in einen kurzen und einen langen Rahmenschenkel (23,25) unterteilt und
daß alle Rahmenschenkel (21,22,23, 24,25,) des Kastenrahmens (20) eine zumindest über den wesentlichen Teil ihrer Schenkellänge reichende Längsdurchbrechung (38) aufweisen.

2. Kabel- und Schlauchhalter nach Anspruch 1, dadurch gekennzeichnet,
daß die Längsdurchbrechungen (38) der Rahmenschenkel (21,22,23, 24,25) jeweils in den Bereichen der Eckkanten des Kastenrahmens (20) unterbrochen sind und im Bereich der Einführöffnung (39) geschlossen sind.

3. Kabel- und Schlauchhalter nach Anspruch 1, dadurch gekennzeichnet, daß die Längsdurchbrechung (38) sich über alle Rahmenschenkel (21,22,23, 24,25) hinweg erstreckt und nur im Bereich der Einführöffnung (39) geschlossen ist.

4. Kabel- und Schlauchhalter nach Anspruch 2 oder 3, dadurch gekennzeichnet, daß die Längsdurchbrechung(en) (38) in der Mitte der Breite der Rahmenschenkel (21,22,23, 24,25) des Kastenrahmens (20) eingebracht ist (sind).

5. Kabel- und Schlauchhalter nach einem der Ansprüche 1 bis 4, dadurch gekennzeichnet, daß die Abmessungen der Rahmenlängsseiten und der Rahmenschmalseiten des Kastenrahmens (20) etwa im Verhältnis 2:1 stehen und daß die Einführöffnung (39) den kurzen und den langen Rahmenschenkel (23 und 25) der zugeordneten Rahmenlängsseite im Verhältnis 1:3 abteilt.

6. Kabel- und Schlauchhalter nach einem der Ansprüche 1 bis 5, dadurch gekennzeichnet, daß der Kastenrahmen (20) aus einem Flachmaterial-Abschnitt gebogen ist und daß in die Rahmenschenkel als Längsschlitze ausgebildete Längsdurchbrechungen oder ein durchgehender Längsschlitz als durchgehende Längsdurchbrechung eingebracht sind oder ist.

7. Kabel- und Schlauchhalter nach Anspruch 6, dadurch gekennzeichnet, daß die Eckkanten des Kastenrahmens (20) und die Ecken im Bereich der Einführöffnung (39) abgerundet sind.

8. Kabel- und Schlauchhalter nach einem der Ansprüche 1 bis 5, dadurch gekennzeichnet, daß der Kastenrahmen (20) aus einem einzigen Runddrahtabschnitt gebogen ist, wobei die Rahmenschenkel (21,22,23, 24,25) jeweils durch zwei im Abstand zueinander verlaufende Abschnitte (26 und 31; 27 und 32; 28 und 33; 29 und 34; 30 und 35) des Runddrahtabschnittes gebildet sind, und daß die der Einführöffnung (39) zugekehrten parallelen Abschnitte (28 und 33 bzw. 30 und 35) des kurzen und langen Rahmenschenkels (23 und 25) jeweils mittels eines quer verlaufenden Abschnittes (36 bzw. 37) des Runddrahtabschnittes miteinander verbunden sind.

9. Kabel- und Schlauchhalter nach Anspruch 8, dadurch gekennzeichnet, daß der aus dem Runddrahtabschnitt gebogene Kastenrahmen (20) an allen Ecken abgerundet ist und daß die an einer Stelle aufeinanderstoßenden Enden des Runddrahtabschnittes miteinander verschweißt sind.

10. Kabel- und Schlauchhalter nach einem der Ansprüche 1 bis 9, dadurch gekennzeichnet, daß eine Befestigungsplatte (40) vorgesehen ist, die einen beliebigen Rahmenschenkel (21,22,23, 24,25) übergreifen kann, daß die Befestigungsplatte (40) mindestens eine mittige Befestigungsbohrung (41) aufweist, die eine Befestigungsschraube (16) aufnimmt, und daß die Befestigungsschraube (16) durch die Längsdurchbrechung (38) des Rahmenschenkels (21,22,23, 24,25) hindurch in eine Bohrung oder Gewindebohrung (11) des Rahmenschenkels oder der Montageschiene (10) des Schaltschrankes einschraubbar ist.

11. Kabel- und Schlauchhalter nach Anspruch 10, dadurch gekennzeichnet, daß die Befestigungsplatte (40) kanalartig gebogene Längsseiten aufweist, die an den Durchmesser des Runddrahtabschnittes des Kastenrahmens (20) angepaßte Längsaufnahmen (42,43) bilden, und daß die Längsaufnahmen (42,43) im Abstand zueinander angeordnet sind, der dem Abstand der parallelen Abschnitte (26 und 31; 27 und 32; 28 und 33; 29 und 34; 30 und 35) der Rahmenschenkel (21,22,23, 24,25) des Kastenrahmens (20) entspricht.

12. Kabel- und Schlauchhalter nach einem der Ansprüche 8 bis 11, dadurch gekennzeichnet, daß die Befestigungsplatte (40) zwischen den Längsaufnahmen (42,43) und außerhalb der Befestigungsbohrung (41) einen abgebogenen Halteansatz (45) aufweist, der in einen Durchbruch (12) eines Rahmenschenkels oder einer Montageschiene (10) des Schaltschrankes einführbar ist und die Befestigungsplatte (40) und damit den Kastenrahmen (20) unverdrehbar festlegt.

13. Kabel- und Schlauchhalter nach einem der Ansprüche 8 bis 12, dadurch gekennzeichnet, daß die Befestigungsplatte (40) neben der Befestigungsbohrung (41) weitere Bohrungen (44) zum Einführen von Haltebolzen (15) aufweist, die an Befestigungswinkeln (13) oder dgl. angebracht sind.

FIG.1

FIG.2

EP 0 338 340 A1

FIG.3

A 7203

| | Europäisches Patentamt | **EUROPÄISCHER RECHERCHENBERICHT** | Nummer der Anmeldung |
|---|---|---|---|
| | | | EP 89 10 6095 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 608 604 (H. MAUELL) <br> * Seite 16, Zeile 5 - Seite 19, Zeile 10; Figuren 2,4-9 * | 1 | H 02 B 1/20 <br> H 02 G 3/04 <br> F 16 L 3/22 <br> F 16 L 3/24 |
| A | | 2,8,9 | |
| | --- | | |
| Y | DE-U-2 776 120 (BETTERMANN ELEKTRO) <br> * Seite 4, Zeile 5 - Seite 5, Zeile 22; Figur 1 * | 1 | |
| A | | 2,9 | |
| | --- | | |
| A | EP-A-0 108 222 (RIETH & CO. GmbH) <br> * Anspruch 1; Figur 1 * | 1 | |
| | ----- | | |

|  |
|---|
| **RECHERCHIERTE SACHGEBIETE (Int. Cl.4)** |
| H 02 B <br> H 02 G <br> F 16 L |

Der vorliegende Recherchenbericht wurde für alle Patentansprüche erstellt

| Recherchenort | Abschlußdatum der Recherche | Prüfer |
|---|---|---|
| DEN HAAG | 19-06-1989 | DAILLOUX C. |